# EUROPÄISCHE PATENTANMELDUNG

(11) **EP 3 583 999 A1**
(43) Veröffentlichungstag der Anmeldung: **25.12.2019**
(21) Anmeldenummer: 18178831.6
(22) Anmeldetag: 20.06.2018
(51) Int. Cl.: B01D 61/02

(54) **UMKEHROSMOSEANLAGE UND VERFAHREN ZUM BETREIBEN EINER UMKEHROSMOSEANLAGE**

(71) Anmelder: OSMO Membrane Systems GmbH, 70825 Korntal-Münchingen (DE)
(72) Erfinder: Müller, Jürgen, 75180 Pforzheim (DE)
(74) Vertreter: Feucker, Max Martin

(57) **Zusammenfassung**

Umkehrosmoseanlage zum Trennen von Stoffen aus einem Strömungsmedium (7) mittels Membrantechnik, umfassend
- eine Umkehrosmosestufe (UO), wobei die UO-Stufe (UO) einen UO-Einlass (1), einen UO-Permeatauslass (2) und einen UO-Retentatauslass (3) aufweist und Stoffe mit einer UO-Rückhaltung aus dem Strömungsmedium (7) trennt,
- eine Filterstufe (FS), die einen FS-Einlass (4), einen FS-Permeatauslass (5) und einen FS-Retentatauslass (6) aufweist und Stoffe mit einer FS-Rückhaltung aus einem der Filterstufe (FS) zugeführten Mediumstrom trennt,
dadurch gekennzeichnet, dass
- der UO-Retentatauslass (3) mit dem FS-Einlass (4) verbunden ist, so dass Retentat der UO-Stufe (UO) der FS-Stufe (FS) zuführbar ist,
- der FS-Permeatauslass (5) mit dem UO-Einlass (1) verbunden ist, so dass Permeat der FS-Stufe (FS) in das der UO-Stufe (UO) zugeführte Strömungsmedium einleitbar ist, und
- die FS-Rückhaltung kleiner ist als die UO-Rückhaltung.

## Beschreibung

Die vorliegende Erfindung betrifft eine Umkehrosmoseanlage und ein Verfahren zum Trennen von Stoffen aus einem Strömungsmedium mittels Membrantechnik. Die Umkehrosmoseanlage umfasst eine Umkehrosmosestufe (UO), wobei die UO-Stufe einen UO-Einlass, einen UO-Permeatauslass und einen UO-Retentatauslass aufweist und Stoffe mit einer UO-Rückhaltung aus dem Strömungsmedium trennt, und eine Filterstufe (FS), die einen FS-Einlass, einen FS-Permeatauslass und einen FS-Retentatauslass aufweist und Stoffe mit einer FS-Rückhaltung aus einem der Filterstufe zugeführten Mediumstrom trennt. Die Filterstufe kann beispielsweise als offene Umkehrosmosestufe oder als enge Nanofiltrationsstufe ausgebildet sein.

Die Nanofiltration als auch die Umkehrosmose gehören zu den druckgetriebenen Membranverfahren (Membrantechnik). Als Membrantrennverfahren werden physikalische Trennverfahren bezeichnet, bei welchen kleine Partikel, Moleküle oder Ionen mit Hilfe einer Membran selektiv aus einem Strömungsmedium abgetrennt werden können. Die Größen der abzutrennenden Teilchen umfassen den Bereich von 1 Nanometer bis zu 10 Mikrometer. Die Membranverfahren werden durch ihre verschiedenen Triebkräfte und Trennmechanismen unterschieden. Man unterscheidet im Bereich der druckgetriebenen Membranverfahren die Mikro-, Ultra- und Nanofiltration sowie die Umkehrosmose. Bei der Nanofiltration und der Umkehrosmose werden mit Hilfe semipermeablen Membrane und unter Anwendung eines Arbeitsdruckes, welcher größer als der in dem Strömungsmedium vorherrschende osmotische Druck ist, Ionen, Moleküle und Kolloide zurückgehalten. Das Wasser passiert die Membrane, und das Strömungsmedium wird aufkonzentriert. Das von der Membrane zurückgehaltene Volumen wird üblicherweise als Retentat oder Konzentrat bezeichnet; das die Membrane passierende Medium wird als Permeat bezeichnet. Das Verhältnis Permeatvolumens am Ausgang der Anlage zu Volumen des Strömungsmediums am Eingang der Anlage, welcher auch Feed gennant wird, wird als Permeatausbeute bezeichnet. Die erzielbare Permeatausbeute einer Umkehrosmoseanlage ist neben der Permeatqualität der wichtigste Faktor dieser Technik, da die Gewinnung, Förderung und Aufbereitung des Strömungsmediums zum Einsatz in der Umkehrosmose mit erheblichen Kosten und Aufwendungen verbunden ist.

Der notwendige Arbeitsdruck wird von einer Hochdruckpumpe feedseitig erzeugt. Mit Durchlauf des Strömungsmediums durch die Membranmodule erfolgt ein Druckverlust. Der verbleibende Restdruck am Retentatauslass wird üblicherweise über eine nachgeschaltete Drosseleinrichtung abgebaut, welche als Drosselventil oder Druckrückgewinnungseinheit ausgeführt sein kann.

Die Hauptanwendungsgebiete der Umkehrosmose sind die Meer- und Brackwasserentsalzung zur Gewinnung von hochwertigem Trink- und Prozesswasser. Daneben wird die Umkehrosmose als Vorkonzentrationsstufe in Prozessen, zum Beispiel vor einer thermischen Eindickung eingesetzt: Hier geht es dann um die maximale Konzentrierung von Inhaltsstoffen bei gleichzeitig geringem Produktverlust mit möglichst geringem Energieaufwand.

Die erzielbaren und üblichen Permeatausbeuten bei der Umkehrosmosetechnik sind stark abhängig von den vorhandenen gelösten Inhaltsstoffen. Der wesentlich begrenzende Faktor bei Brack-, Seewasser und salzhaltigen Prozesslösungen ist die osmotische Druckdifferenz zwischen der Zuführ- und der Permeatseite der Membrane, welche leistungsmindernd beziehungsweise begrenzend in Bezug auf die erzielbare Permeatausbeute ist. Die osmotische Druckdifferenz zwischen dem Permeat und dem zurückbleibenden Retentat an einer Stufe der Anlage lässt sich näherungsweise anhand der thermodynamischen Definition des osmotischen Druckes berechnen.

So weist Meerwasser als Strömungsmedium beispielsweise einen Salzgehalt von 40 g/l. In einer Umkehrosmoseanlage mit ausschließlich einer einzelnen Umkehrosmosestufe erfolgt eine Aufkonzentration auf etwa 72 g/l im Retentat. Das erzeugte Permeat hat in der Regel eine Salzkonzentration von etwa 200-400 ppm, d.h. nahezu 0 g/l Salz. Die osmotische Druckdifferenz zwischen Retentat und Permeatkonzentration ergibt sich aus der Differenz im Salzgehalt zu etwa 57,6 bar. Wird der einzelnen Umkehrosmosestufe Meerwasser mit 10 m³/h zugeführt erhält man ein Permeat mit 4,5 m³/h. Die erzielte Permeatausbeute beträgt also 45 % (4,5 m³/h Permeat ÷ 10 m³/h zugeführtem Meerwasser).

Zur Erhöhung der Permeatausbeute sind Systeme bekannt, bei welchen einer ersten Filterstufe retentatseitig weitere Konzentratstufen mit höherer Rückhaltung nachgeschaltet sind, wozu aber eine Druckerhöhung nach der ersten Filterstufe erforderlich ist.

Aus DE 10 2007 019 347 B3 ist beispielsweise bekannt, dass die Anordnung einer Nanofiltrationsstufe vor der Umkehrosmosestufe zur Erhöhung der Gesamtausbeute beitragen kann. Nachteilig ist bei dieser Anordnung jedoch, dass das komplette Meerwasser zunächst die Nanofiltration passieren muss, und danach die Umkehrosmose, so dass hohe Energieverbräuche entstehen. Die aufzuwendende Membranfläche verdoppelt sich nahezu. Die Nanofiltration reduziert zudem einen Anteil der enthaltenen Inhaltsstoffe, wie zum Beispiel Härtebilder oder organische Inhaltsstoffe sowie einwertige Ionen zum geringen Teil. In der Praxis hat sich diese Verfahrensvariante nicht durchgesetzt.

Aufgabe der vorliegenden Erfindung ist es daher, die mit Bezug zum Stand der Technik geschilderten Nachteile zumindest teilweise zu beseitigen und insbesondere eine Umkehrosmoseanlage und ein Verfahren anzugeben, mit denen sich die Permeatausbeute der Anlage erhöhen lässt, ohne dass ein wesentlicher zusätzlicher Energieaufwand nötig und ohne dass die Qualität des Permeats negativ beeinflusst ist.

Gelöst wird die Aufgabe durch eine Umkehrosmoseanlage und ein Verfahren gemäß den unabhängigen Ansprüchen. Vorteilhafte Weiterbildungen der Umkehrosmoseanlage und des Verfahrens sind in den abhängigen Ansprüchen und in der Beschreibung angegeben, wobei einzelne Merkmale der vorteilhaften Weiterbildungen in technisch sinnvoller Weise beliebig miteinander kombinierbar sind.

Gelöst wird die Aufgabe insbesondere durch eine Umkehrosmoseanlage mit den eingangs genannten Merkmalen, bei der der Retentatauslass der Umkehrosmosestufe mit dem Einlass der Filterstufe verbunden ist, so dass das Retentat der Umkehrosmosestufe der Filterstufe zuführbar ist, und bei der der Permeatauslass der Filterstufe mit dem Einlass der Umkehrosmosestufe verbunden ist, so dass das Permeat der Filterstufe in das der Umkehrosmosestufe zugeführte Strömungsmedium einleitbar ist, und wobei die Rückhaltung der Filterstufe kleiner ist als die Rückhaltung der Umkehrosmosestufe.

Entsprechend wird für das erfindungsgemäße Verfahren vorgeschlagen, dass das Strömungsmedium (auch als Feed-Lösung bezeichnet) einer Umkehrosmosestufe zugeführt wird, wobei das Retentat der Umkehrosmosestufe zu einer Filterstufe weitergeleitet wird und das Permeat der Filterstufe in das der Umkehrosmosestufe zugeführte Strömungsmedium eingeleitet wird.

Die Erfindung sieht in ihrem Grundgedanken also vor, dass das Retentat der Osmosestufe mittels einer nachgeschalteten Filterstufe so aufbereitet wird, dass ein Teil (Permeat der nachgeschalteten Filterstufe) des Retentats dem Strömungsmedium eingangsseitig zu der Umkehrosmosestufe zurückgeführt wird, wodurch der Volumenstrom des ursprünglich zur Verfügung gestellten Strömungsmediums um den Volumenstrom des Permeats der nachgeschalteten Filterstufe reduziert werden kann, so dass sich die Gesamtpermeatausbeute der Anlage wesentlich verbessert.

Prinzipiell ist es möglich, dass zwischen dem Retentatauslass der Umkehrosmosestufe und dem Einlass der nachgeschalteten Filterstufe eine Vorrichtung zur Erhöhung des Druckes (Pumpe) vorgesehen ist, die die durch Strömungswiderstände entstehenden Druckverluste ausgleicht. Es ist aber bevorzugt, dass zwischen dem UO-Retentatauslass und dem Einlass der Filterstufe keine Vorrichtung zur Druckerhöhung vorgesehen ist, so dass an dem Einlass der Filterstufe (bis auf Strömungswiderstände verursachte Druckabfälle) im Wesentlichen der gleiche Druck vorherrscht wie am Retentatauslass der Umkehrosmosestufe.

Weiterhin ist es bevorzugt, dass am Retentatauslass der Umkehrosmosestufe keinerlei Druckreduzierung durch ein Drosselventil oder eine Druckrückgewinnung stattfindet, so dass der vorliegende Retentatdruck vollständig für die nachgeschaltete Filterstufe Verwendung finden kann.

Die Rückhaltung der Filterstufe ist hierfür so gewählt, dass die Filterstufe ohne Druckerhöhung nach dem Retentatauslass der Umkehrosmosestufe betrieben werden kann und ist ferner so gewählt, dass das Permeat der Filterstufe in seiner Qualität (z. B. Salzgehalt) in etwa der Qualität des der Umkehrosmosestufe ursprünglich zugeführten Strömungsmediums (Feed-Lösung) entspricht.

Für den Fall, dass das Strömungsmedium Salzwasser und bevorzugt Meerwasser ist, beträgt die Rückhaltung der Umkehrosmosestufe für Salz mindestens 95%, bevorzugt mindestens 98% und besonders bevorzugt mindestens 99% bei einer maximalen Rückhaltung der Membranen von beispielsweise 99,7% oder bevorzugt maximal 99,8%, während die Rückhaltung der Filterstufe für Salz zwischen 55% und 85% bevorzugt zwischen 60% und 75% liegt. So kann die nachgeschaltete Filterstufe beispielsweise als zweite Umkehrosmosestufe mit geringerer Rückhaltung der Umkehrosmosemembran als die der ersten Umkehrosmosestufe oder als Nano-Filterstufe ausgebildet sein, die eine Nano-Filtrationsmembran enthält. Die Rückhaltung der einzelnen Membranen der Filterstufe liegt dabei im Bereich von 70% bis 80%.

Es ist somit kein zusätzlicher Energiebedarf erforderlich, um die nachgeschaltete Filterstufe zu betreiben, da der retentatseitig vorliegende Druck am Ausgang der Umkehrosmosestufe ausreicht um die nachgeschaltete Filterstufe zu betreiben.

Die Salzrückhaltung der Membranen wird anhand von mehr oder minder standardisierten Rückhaltetest ermittelt. Die Salzrückhaltung wird dann anhand dem im Feed bzw. Retentat und Permeat vorliegenden Verhältnis berechnet. Zur Charakterisierung von Umkehrosmosemembranen wird in der Regel Natriumchlorid mit einem Salzgehalt von 2.000 mg/l für Brackwassermembranen sowie ein Salzgehalt von 32.000 mg/l für Seewassermembranen verwendet. Nanofiltrationsmembranen werden mit mehrwertigen Salzlösungen charakterisiert, in der Regel mit Magnesiumsulfat bei 2.000 mg/l. Beispielsweise haben sich Umkehrosmosemembranen für die nachgeschaltete Filterstufe mit einem Natriumchloridrückhalt im Bereich von 70 % (bei 32.000 mg/l Feedlösung) bzw. 80 % (bei 2.000 mg/l Feedlösung) als vorteilhaft erwiesen. Je nach Membranhersteller werden Membranen mit einem Natriumchloridrückhalt von 70-80 % entweder als Umkehrosmose- oder Nanofiltrationsmembranen bezeichnet.

Es können insbesondere weitere Filterstufen vorgesehen sein. Beispielsweise kann eine zweite Filterstufe vorgesehen sein, deren Einlass an den Retentatauslass der (ersten) Filterstufe angeschlossen ist und deren Permeatauslass mit dem Einlass der Filterstufe verbunden ist. Die Rückhaltung der Membran der zweiten Filterstufe wäre dann so gewählt, dass ein Betrieb mit dem an dem Retentatauslass der ersten Filterstufe vorliegenden Druck möglich ist und dass das Permeat der zweiten Filterstufe eine Qualität (beispielsweise Salzgehalt) aufweist, die im Wesentlichen der Qualität des Retentats der Umkehrosmosestufe entspricht, welches der ersten Filterstufe zugeführt wird. Hierbei kann es erforderlich sein, dass am Auslass der zweiten Filterstufe eine Vorrichtung zur Druckerhöhung angeordnet ist, um das Druckniveau des Permeats der zweiten Filterstufe auf das Niveau des Retentats der Umkehrosmosestufe zu bringen.

Weitere Filterstufen wären dann jeweils dem Retentatauslass der vorhergehenden Filterstufe nachgeschaltet, wobei das Permeat der nachgeschalteten Filterstufe dem Einlass der vorgeschalteten Filterstufe zugeführt würde.

Der verbleibende Restdruck nach der wenigstens einen Filterstufe am Retentatauslass der Umkehrosmoseanlage kann über eine nachgeschaltete Drosseleinrichtung abgebaut werden, wobei die Drosseleinrichtung beispielsweise als Drosselventil oder Druckrückgewinnungseinheit ausgeführt sein kann.

Es kann weiter vorgesehen sein, dass die Umkehrosmosestufe und die Filterstufe für maximale Mediumsdrücke von 70 bar von 130 bar ausgelegt sind, wobei bevorzugt Salzwasser und besonders bevorzugt Meerwasser als Strömungsmedium mit einem Arbeitsdruck zwischen 60 bar und 130 bar der Umkehrosmosestufe zugeführt wird. Eine entsprechende Druckbeständigkeit wird durch die mechanische Anbringung der an sich bekannten Membranen in den einzelnen Stufen erreicht.

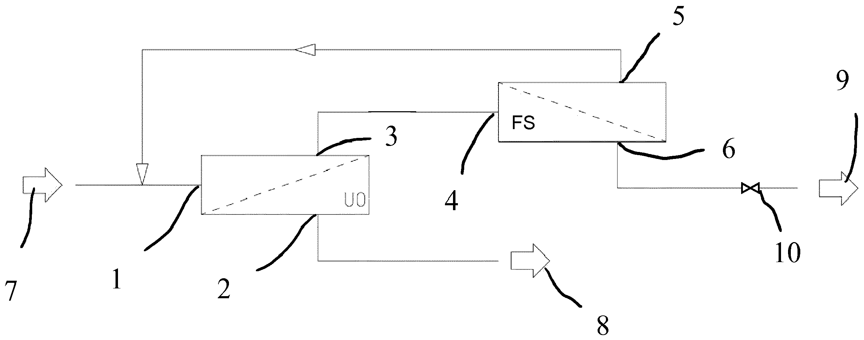

Die Erfindung sowie das technische Umfeld werden im Folgenden anhand der Figur beispielhaft erläutert.

Die dargestellte Umkehrosmoseanlage umfasst eine Umkehrosmosestufe UO mit einem UO-Einlass 1, einem UO-Permeatauslass 2 und einem UO-Retentatauslass 3. Die Umkehrosmoseanlage umfasst ferner eine Filterstufe FS mit einem FS-Einlass 4, einem FS-Permeatauslass 5 und einem FS-Retentatauslass 6. Der FS-Einlass 4 der Filterstufe FS ist mit dem UO-Retentatauslass 3 der Umkehrosmosestufe UO verbunden, so dass die Filterstufe FS der Umkehrosmosestufe UO retentatseitig nachgeschaltet ist.

Der FS-Permeatauslass 5 der Filterstufe FS ist zudem mit den UO-Einlass 1 der Umkehrosmosestufe UO verbunden.

Im Betrieb wird nun ein Strömungsmedium 7, beispielsweise Meerwasser über den UO-Einlass 1 der Umkehrosmosestufe UO zugeführt. Das am UO-Permeatauslass 2 austretende Permeat wird als Gesamtpermeat 8 der Umkehrosmoseanlage einer weiteren Verwendung zugeführt.

Das Retentat der Umkehrosmosestufe UO wird über den UO-Retentatauslass 3 und den FS-Einlass 4 der Filterstufe FS zugeführt. Das an dem FS-Retentatauslass 6 der Filterstufe FS austretende Retentat wird als Gesamtretentat 9 einer weiteren Verwendung zugeführt, beispielsweise zurück ins Meer geleitet. Das am FS-Permeatauslass 5 austretende Permeat der Filterstufe FS wird hingegen in die Zuleitung zur Umkehrosmosestufe UO zurückgeleitet.

Da die Rückhaltung der Filterstufe FS so gewählt ist, dass diese mit dem am UO-Retentatauslass 3 vorliegenden Druck betrieben werden kann und da die Qualität (Salzgehalt) des Permeats der Filterstufe FS der Qualität des Strömungsmediums 7 entspricht, kann ohne den Einsatz zusätzlicher Energie die Gesamtpermeatausbeute der Umkehrosmoseanlage verbessert werden.

Wird beispielsweise der Umkehrosmosestufe UO ein Volumenstrom von 10 m³/h mit einer Salzkonzentration von 40 g/l zugeführt, so weist das Gesamtpermeat 8 einen Volumenstrom von 4,5 m³/h bei einer Salzkonzentration von fast 0 g/l auf. Der Volumenstrom des Retentats der Umkehrosmosestufe UO beträgt hingegen 5,5m³/h bei einer Salzkonzentration von 72g/l. Dieser Volumenstrom wird wiederum in der Filterstufe FS in ein Gesamtretentat 9 mit einem Volumenstrom von 3 m³/h bei einer Salzkonzentration von 100 g/l und einen Permeatstrom am FS-Permeatauslass 5 der Filterstufe FS mit einem Volumenstrom von 2,5 m³/h bei einer Salzkonzentration von 38g/l geteilt. Der Salzgehalt dieses Permeatstroms der Filterstufe FS entspricht also im Wesentlichen dem Salzgehalt von Meerwasser.

Der Druckabbau mit einem Drosselventil 10 oder Druckrückgewinnungssystem erfolgt erst nach dem FS-Retentatauslass 6 der Filterstufe FS.

Insofern kann der Volumenstrom des der Umkehrosmoseanlage zugeführten Meerwassers um die Höhe des Volumenstroms des Permeats der Filterstufe FS reduziert werden. In diesem Beispiel können beispielsweise 7,5m³/h Meerwasser mit einem Salzgehalt von 40g/l der Umkehrosmoseanlage zugeführt werden, so dass sich der der Umkehrosmosestufe UO zugeführte Volumenstrom zu 10 m³/h addiert. Die Gesamtpermeatausbeute beträgt dann 60% (Gesamtpermeatausbeute = 4,5m³/h Gesamtpermeat ÷ 7,5m³/h zugeführtes Meerwasser). Die Permeatausbeute ist also 15 Prozentpunkte höher als bei der Verwendung einer einzelnen Umkehrosmosestufe, wie sie beispielsweise eingangs erläutert wurde. Da keine Druckerhöhung zwischen Umkehrosmosestufe UO und Filterstufe FS erforderlich ist, ist diese Erhöhung der Permeatausbeute nahezu ohne zusätzlichen Energieaufwand erzielbar.

### Bezugszeichenliste

- UO: Umkehrosmosestufe
- FS: Filterstufe
- 1: UO-Einlass
- 2: UO-Permeatauslass
- 3: UO-Retentatauslass
- 4: FS-Einlass
- 5: FS-Permeatauslass
- 6: FS-Retentatauslass
- 7: Strömungsmedium
- 8: Gesamtpermeat
- 9: Gesamtretentat
- 10: Drosselventil

## Patentansprüche

1. Umkehrosmoseanlage zum Trennen von Stoffen aus einem Strömungsmedium (7) mittels Membrantechnik, umfassend
- eine Umkehrosmosestufe (UO), wobei die UO-Stufe (UO) einen UO-Einlass (1), einen UO-Permeatauslass (2) und einen UO-Retentatauslass (3) aufweist und Stoffe mit einer UO-Rückhaltung aus dem Strömungsmedium (7) trennt,
- eine Filterstufe (FS), wobei die FS-Stufe (FS) einen FS-Einlass (4), einen FS-Permeatauslass (5) und einen FS-Retentatauslass (6) aufweist und Stoffe mit einer FS-Rückhaltung aus einem der Filterstufe (FS) zugeführten Mediumstrom trennt,
**dadurch gekennzeichnet, dass**
- der UO-Retentatauslass (3) mit dem FS-Einlass (4) verbunden ist, so dass Retentat der UO-Stufe (UO) der FS-Stufe (FS) zuführbar ist,
- der FS-Permeatauslass (5) mit dem UO-Einlass (1) verbunden ist, so dass Permeat der FS-Stufe (FS) in das der UO-Stufe (UO) zugeführte Strömungsmedium einleitbar ist, und
- die FS-Rückhaltung kleiner ist als die UO-Rückhaltung.

2. Umkehrosmoseanlage nach Anspruch 1, wobei die FS-Rückhaltung mit Bezug auf die UO-Rückhaltung so gewählt ist, dass die Filterstufe (FS) ohne Druckerhöhung zwischen dem UO-Retentatauslass (3) und dem FS-Einlass (4) betrieben werden kann.

3. Umkehrosmoseanlage nach Anspruch 1 oder 2, wobei das Strömungsmedium Salzwasser ist und die UO-Rückhaltung für Salz mindestens 95 %, bevorzugt mindestens 98% und besonders bevorzugt mindestens 99 % beträgt, während die FS-Rückhaltung für Salz 55 % bis 85 %, bevorzugt 60 % bis 75 % beträgt.

4. Umkehrosmoseanlage nach einem der vorhergehenden Ansprüche, wobei eine zweite Filterstufe (FS2) vorgesehen ist, deren FS2-Einlass an den FS-Retentatauslass (6) der Filterstufe (FS) angeschlossen ist und deren FS2-Permeatauslass mit dem FS-Einlass (4) der Filterstufe (FS) verbunden ist.

5. Umkehrosmoseanlage nach einem der vorhergehenden Ansprüche, wobei die Umkehrosmosestufe (UO) und die Filterstufe (FS) für maximale Mediumsdrücke von 70 bar bis 130 bar ausgelegt sind.

6. Verfahren zum Trennen von Stoffen aus einem Strömungsmedium (7) mittels Membrantechnik, umfassend die folgenden Schritte
- Zuführen des Strömungsmediums (7) zu einer Umkehrosmosestufe (UO),
- Weiterleiten des Retentats der Umkehrosmosestufe (UO) zu einer Filterstufe (FS),
- Einleiten des Permeats der Filterstufe (FS) in das der Umkehrosmosestufe (UO) zugeführte Strömungsmedium (7), wobei die Rückhaltung der Filterstufe (FS) kleiner ist als die Rückhaltung der Umkehrosmosestufe (UO).

7. Verfahren nach Anspruch 6, wobei der Druck am UO-Retentatauslass (3) dem Druck am FS-Einlass (4) entspricht.

8. Verfahren nach Anspruch 6 oder 7, wobei das Retentat der Filterstufe (FS) einer zweiten Filterstufe zugeführt wird und das Permeat der zweiten Filterstufe in den der Filterstufe (FS) zugeführten Mediumstrom eingeleitet wird.

9. Verfahren nach einem der Ansprüche 6 bis 8, wobei der Umkehrosmosestufe (UO) als Strömungsmedium Salzwasser mit einem Arbeitsdruck zwischen 60 bar und 130 bar zugeführt wird.
